(19) Europäisches Patentamt

European Patent Office

Office européen des brevets

(11) Veröffentlichungsnummer: **0 499 267 B1**

(12) **EUROPÄISCHE PATENTSCHRIFT**

(45) Veröffentlichungstag der Patentschrift: **13.12.95**

(51) Int. Cl.⁶: **C08F 6/04**, C08G 85/00

(21) Anmeldenummer: **92102500.3**

(22) Anmeldetag: **14.02.92**

(54) **Verfahren und Vorrichtung zur technischen Fraktionierung von Polymeren**

(30) Priorität: **14.02.91 DE 4104573**

(43) Veröffentlichungstag der Anmeldung:
**19.08.92 Patentblatt 92/34**

(45) Bekanntmachung des Hinweises auf die
Patenterteilung:
**13.12.95 Patentblatt 95/50**

(84) Benannte Vertragsstaaten:
**AT BE CH DE DK ES FR GB GR IT LI LU NL PT
SE**

(56) Entgegenhaltungen:
**EP-A- 0 127 388
EP-A- 0 129 329
DE-A- 3 242 130**

**Makromol.Chem.186,735-751,(1985) Geerissen et al "Continuous fractionation. .." * Seiten 735-737***

**Makromol.Chem.186,777-785(1985) Geerissen
et al "Continuous fractionation. .." (Zusammenfassung)**

(73) Patentinhaber: **Plüss-Staufer AG**

**CH-4665 Oftringen (CH)**

(72) Erfinder: **Weinmann, Klaus
Rüsterstrasse 10
W-6501 Gau-Bischofsheim (DE)**
Erfinder: **Tschersich, Lutz
Willi-Bredel-Strasse 43-15
W-4070 Halle (DE)**
Erfinder: **Wolf, Bernhard Anton
Fontanastrasse 84
W-6500 Mainz (DE)**

(74) Vertreter: **Reinhard - Skuhra - Weise & Partner
Postfach 44 01 51
D-80750 München (DE)**

Rank Xerox (UK) Business Services
(3.10/3.09/3.3.3)

**Beschreibung**

Die Erfindung betrifft ein Verfahren zur technischen Fraktionierung von Polymeren unter Verwendung einer Extraktionskolonne und eines Extraktionsagens sowie eine Vorrichtung zur Durchführung dieses Verfahrens.

Das Fraktionieren von Polymeren aus einer Lösung ist bereits aus M.J.R: Cantow: Polymer Fractionation; Academic Press N.Y. 1967, sowie aus M. Hoffmann, H. Krömer, R. Kuhn: Polymeranalytik, Thieme Verlag, Stuttgart 1977, bekannt. Hierbei wird das in verdünnter Lösung vorliegende Polymer nach dem Molekulargewicht und/oder nach der chemischen Zusammensetzung mit Hilfe von Phasengleichgewichten aufgetrennt, wobei sich durch oftmalige Wiederholung von diskontinuierlichen Grundschritten und sinnvoller Wiedervereinigung von Zwischenfraktionen gute Trennerfolge erzielen lassen. Einer wirtschaftlichen Verwertung des Verfahrens steht jedoch ein hoher Aufwand an Arbeitszeit und Lösungsmittel entgegen, der bei einer den Grammaßstab übersteigenden Fraktionierung benötigt wird.

Ein Verfahren der eingangs genannten Art ist bereits in der DE-OS 32 42 130 offenbart. Bei diesem vorbekannten Verfahren wird vorteilhaft der Effekt ausgenutzt, daß man aus Polymerproben mit großer molekularer und/oder chemischer Uneinheitlichkeit Produkte mit geringer Uneinheitlichkeit herstellen kann, wenn man die zu fraktionierenden Polymere in einem geeigneten Ein- oder Mehrkomponentenlösungsmittel löst und diese Lösung bzw. diesen Feed mit Hilfe einer zweiten Flüssigkeit bzw. Extraktionsagens, das dieselben Lösungsmittelkomponenten enthält wie der Feed, kontinuierlich im Gegenstrom extrahiert. Dabei wird/werden die Lösungskomponente (n) im Feed und im Extraktionsagens so gewählt, daß erstens das Gesamtsystem aus Ausgangspolymeren und Lösungsmittelkomponente (n) bei der Betriebstemperatur eine Mischungslücke aufweist, daß zweitens die Zusammensetzung des Feeds im Phasendiagramm einem Punkt außerhalb dieser Mischungslücke entspricht, und daß drittens das Extraktionsagens so zusammengesetzt ist, daß die Verbindungslinie zwischen Feed und Extraktionsagens (Betriebsgerade) die Mischungslücke schneidet.

Zur Optimierung der Auftrennung wurde das Verhältnis der Flüsse von Feed und Extraktionsagens so gewählt, daß der Betriebspunkt, d. h. die mittlere Zusammensetzung des gesamten Inhaltes der Fraktioniervorrichtung bei stationärem Betrieb, bei höheren Polymerkonzentrationen liegt als der Schnittpunkt der Betriebsgeraden mit dem der niedrigeren Polymerkonzentration zugehörenden Teil der Entmischungskurve. In allen Fällen wird der Betriebspunkt im Innern der Mischungslücke gewählt.

Die Fraktionierung wird dadurch erreicht, daß sich die in die Extraktionskolonne eingeführten Polymermoleküle abhängig von ihrem Molekulargewicht bzw. ihrer chemischen Zusammensetzung bzw. ihrem geometrischen Bau in unterschiedlichem Ausmaß auf gegeneinander strömende Phasen aufteilen, wobei die Auftrennung durch zusätzliche Maßnahmen, wie beispielsweise eine hohe Dispergierung der Phasen erleichtert wird. Es wird also mit einer besonderen Form einer kontinuierlichen Gegenstromextraktion gearbeitet, bei der bevorzugt eine "innere Mischungslücke" verwendet wird, bei der eine Entmischung nur in Gegenwart des Polymeren auftritt. Vereinfacht ausgedrückt müssen sich z.B. die Polymermoleküle unterschiedlicher Länge nicht entscheiden, ob sie ein bestimmtes Lösungsmittel, welches mit einem anderen nur begrenzt mischbar ist, einem anderen vorziehen, sondern lediglich, ob sie lieber in der verdünnteren oder in der konzentrierteren aneinander vorbei strömenden Phase vorliegen wollen.

Als nachteilig ist bei diesem vorbekannten Verfahren anzusehen, daß es sich aus thermodynamischen Gründen nicht vermeiden läßt, daß das entfernte So1 noch beträchtliche Anteile von langen Ketten enthält, d. h. daß eine befriedigende Fraktionierung nur durch mehrere unterschiedliche Experimente zu erzielen ist. Das vorbekannte Fraktionierverfahren ist daher als technisch unbrauchbar anzusehen.

Der Erfindung liegt die Aufgabe zugrunde, ein Verfahren und eine Vorrichtung zur technischen Fraktionierung von Polymeren verfügbar zu machen, bei dem bzw. mit der hochmolekulare Substanzen mit vergleichbarer Schärfe wie niedrigmolekulare Substanzen getrennt werden können und zwar nach unterschiedlichen Kriterien (insbesondere Molekulargewicht, chemischer Bau, geometrischer Bau). Das Verfahren soll auch für die Aufbereitung / das Recycling und die Wiederverwertung von Kunststoffen geeignet sein, und das nach dem Verfahren bzw. mit der Vorrichtung fraktionierte Polymer soll als Dispergiermittel und/oder als Mahlhilfsmittel für Füllstoffe und/oder Mineralien und/oder Pigmente einsetzbar sein.

Erfindungsgemäß wird diese Aufgabe verfahrensseitig durch die im Patentanspruch 1 und vorrichtungsseitig durch die im Patentanspruch 18 angegebenen Merkmale gelöst. Eine bevorzugte erfindungsgemäße Verwendung des Verfahrens ist in Anspruch 15 und des fraktionierten Polymers in den Ansprüchen 16 und 17 gekennzeichnet.

Bevorzugte Merkmale, die das Verfahren und die Vorrichtung vorteilhaft weiterbilden, sind den jeweils dem Patentanspruch 1 bzw. Patentanspruch 18 nachgeordneten Patentansprüchen zu entnehmen.

Das erfindungsgemäße Verfahren zur technischen Fraktionierung von Polymeren unter Verwendung eines Extraktionskolonne und eines homogenen Extraktionsagens weist vorteilhaft folgende Verfahrensschritte auf:

(a) ein homogener Feed wird einem Bereich der Extraktionskolonne zugeführt, der von deren oberen Ende näher beabstandet ist, wenn der Feed eine größere Dichte als das Extraktionsagens aufweist, und der von deren unteren Ende näher beabstandet ist, wenn der Feed eine geringere Dichte als das Extraktionsagens aufweist;

(b) das homogene Extraktionsagens wird einem vom unteren Ende näher beabstandeten Bereich der Extraktionskolonne zugeführt, wenn der Feed eine größere Dichte als das Extraktionsagens aufweist, und einem vom oberen Ende näher beabstandeten Bereich zugeführt, wenn der Feed eine geringere Dichte als das Extraktionsagens aufweist, wobei der unterhalb der oberen Zuführstelle liegende Kolonnenabschnitt auf einer ersten Temperatur $T_1$ gehalten wird;

c) die Flüsse des Feeds und des Extraktionsagens werden derart gewählt, daß bei der Temperatur $T_1$ zwei Phasen koexistieren und die erwünschte Zerteilung des Ausgangspolymeren auf die beiden erhaltenen Fraktionen gewährleistet ist, wobei ein Weitertransport der aus dem Extraktionsagens hervorgegangenen polymerärmeren Phase in einen anschließenden Kolonnenbereich erfolgt, in dem eine Temperatur $T_2$ herrscht, die niedriger ist als die Temperatur $T_1$, wenn die Polymerlöslichkeit mit fallender Temperatur abnimmt, und die größer ist als die Temperatur $T_1$, wenn die Polymerlöslichkeit mit steigender Temperatur abnimmt;

(d) bei der Temperatur $T_2$ wird eine polymerreichere Phase abgeschieden, die sich in den anschließenden Kolonnenbereich mit der Temperatur $T_1$ bewegt, dort nicht mehr vollständig aufgelöst und in den Extraktionsprozeß derart einbezogen wird, daß im stationären Zustand an dem Kolonnenende, an dem diese Phase austritt, eine Gelphase abgenommen wird, welche die in der einen Fraktion erwünschten molekularen Bestandteile enthält;

(e) am anderen Kolonnenende wird die Solphase ausgetragen, welche die in der anderen Fraktion erwünschten molekularen Bestandteile enthält; und

(f) die Schritte (a) bis (e) werden unter direkter Verwendung der gewonnenen Gelfraktion als Feed solange wiederholt, bis die Ausgangsprobe in die gewünschte Zahl von Fraktionen zerlegt ist.

Die erfindungsgemäße Vorrichtung zur Durchführung des Verfahrens besteht vorteilhaft aus einer Extraktionskolonne mit einem länglichen Gehäuse, das einen unteren, eine erste Temperaturregeleinrichtung aufweisenden Abschnitt und einen sich daran anschließenden oberen zweiten Abschnitt mit einer zweiten Temperaturregeleinrichtung besitzt und aus einem näher vom oberen Ende der Extraktionskolonne beabstandeten ersten Einlaß für Feed-Extraktionsagens, einem näher vom unteren Ende der Extraktionskolonne beabstandeten zweiten Einlaß für Extraktionsagen-Feed, einem Fraktionsablauf am oberen Ende der Extraktionskolonne und aus einem Fraktionsablauf am unteren Ende der Extraktionskolonne.

Erfindungsgemäß ist es vorteilhaft erstmals möglich, die Ausgangspolymeren in einem Verfahrensschritt so zu zerlegen, daß die abgetrennte Solfraktion sofort mit der gewünschten Einheitlichkeit zur Verfügung steht und die gebildete Gelfraktion unmittelbar wieder für die Abtrennung der nächsten Fraktion durch nochmalige Extraktion unter veränderten Bedingungen bezüglich der Zusammensetzung des Extraktionsagens, der Bemessung der Zuflüsse sowie der Einstellung der Temperaturen eingesetzt werden kann.

In vorteilhafter Weise wird oberhalb bzw. unterhalb des Feeds bzw. Extraktionsagenseinlaufs aus der weiterhin nach oben bzw. unten transportierten Solphase eine neue polymerreiche Phase ausgeschieden, wobei diese wiederum sedimentierende bzw. aufsteigende Phase bevorzugt die schwerer löslichen Moleküle enthält.

Gemäß einer bevorzugten weiteren Ausgestaltung der Erfindung wird vorteilhaft die Temperatur $T_1$ im Falle binärer Systeme vom Extremum der Trübungskurve bis zu 30 °C entfernt im Innern der Mischungslükke und im Fall ternärer Systeme im Temperaturbereich der flüssig/flüssig-Entmischung gewählt, wobei man sowohl für die binären, als auch für die ternären Systeme $T_2$ je nach den Temperatureinflüssen auf die Löslichkeit der Polymeren bis zu 40 °C von $T_1$ entfernt festgelegt.

Vorzugsweise ist weiterhin vorgesehen, daß bei dem Verfahrensschritt (f) bei der Verwendung von Mischlösungsmitteln deren Gehalt an der thermodynamisch besseren Komponente soweit erhöht wird, daß bei Beibehaltung der Temperatur $T_1$ die leichter löslichen Bestandteile der als Feed verwendeten Gelfraktion des vorherigen Verfahrensschrittes löslich werden, wobei die Temperatur $T_2$ infolge der gestiegenen Einheitlichkeit des Feeds näher bei der Temperatur $T_1$ liegt, als beim vorhergehenden Schritt.

Bei Verwendung eines Einkomponentenlösungsmittels bei dem Verfahresschritt (f) wird im Fall der Abnahme der Polymerlöslichkeit mit sinkender Temperatur die Temperatur $T_1$ angehoben und die Temperatur $T_2$ in einem Abstand unterhalb der Temperatur $T_1$ eingestellt, der mit sinkendem Betrag der Mischungswärme des Systems zunimmt, während bevorzugt bei Verwendung eines Einkomponentenlö-

3

sungsmittels im Fall der Abnahme der Polymerlöslichkeit mit steigender Temperatur die Temperatur $T_1$ abgesenkt und die Temperatur $T_2$ entsprechend über diesem Wert gewählt wird.

Das erfindungsgemäße Verfahren und die erfindungsgemäße Vorrichtung eignen sich z.B. für folgende vier Fraktionieraufgaben:

1) Technische Fraktionierung von Polymerproben, die nur linear gebaute Moleküle unterschiedlichen Molekulargewichts aus chemisch identischen Bausteinen (lineare Homopolymere) enthalten, wobei die Polymerlöslichkeit mit steigendem Molekulargewicht und mit sinkender Temperatur abnimmt, und wobei der Feed eine größere Dichte als das Extraktionsagens aufweist.

2) Technische Fraktionierung von Polymerproben, die nur linear gebaute Moleküle unterschiedlichen Molekulargewichts aus chemisch identischen Bausteinen (lineare Homopolymere) enthalten, wobei die Polymerlöslichkeit mit steigender Temperatur abnimmt und die Dichte des Feeds größer ist als die des Extraktionsagens.

3) Technische Fraktionierung von Polymerproben, die nur linear gebaute Moleküle unterschiedlichen Molekulargewichts aus chemisch identischen Bausteinen (lineare Homopolymere) enthalten, wobei die Polymerlöslichkeit mit steigendem Molekulargewicht und mit sinkender Temperatur abnimmt, und wobei die Dichte des Feeds geringer ist als die des Extraktionsagens.

4) Technische Fraktionierung von Polymerproben, die nur linear gebaute Moleküle unterschiedlichen Molekulargewichts aus chemisch identischen Bausteinen (lineare Homopolymere) enthalten, wobei die Polymerlöslichkeit mit steigendem Molekulargewicht und mit steigender Temperatur abnimmt, und wobei die Dichte des Feeds geringer ist als die des Extraktionsagens.

Im erstgenannten Fall wird der homogene Feed in einem Bereich der Extraktionskolonne eingeführt, der näher von deren oberen Ende beabstandet ist, und das homogene Extraktionsagens wird im Bereich des unteren Endes der Extraktionskolonne zugeführt, wobei die Temperatur $T_1$ größer ist als die Temperatur $T_2$.

Beim zweiten Fall erfolgt die Zuführung des Feeds und des Extraktionsagens wie im Fall 1, wobei jedoch die Temperatur $T_2$ größer ist als die Temperatur $T_1$.

Im dritten Fall wird der homogene Feed in einem vom unteren Ende der Extraktionskolonne näher beabstandeten Bereich und das Extraktionsagens im Bereich des oberen Endes der Kolonne zugeführt, wobei die Temperatur $T_1$ größer ist als die Temperatur $T_2$.

Beim vierten Fall erfolgt die Durchführung des Feeds und des Extraktionsagens wie im Fall 3, wobei jedoch die Temperatur $T_2$ größer ist als die Temperatur $T_1$.

Die Zusammensetzung des Feeds wird in günstiger Weise durch einen Punkt im Gibbschen Phasendreieck festgelegt, der außerhalb der Mischungslücke des betreffenden Systems bei einer gegebenen Arbeitstemperatur liegt. Diese Ausgangslösung soll möglichst konzentriert an Polymer sein und, im Falle der Verwendung eines Mischlösungsmittels, schon eine hinreichende Menge an thermodynamisch schlechtem Lösungsmittel enthalten.

Die Auswahl der Lösungsmittel ergibt sich aufgrund der Notwendigkeit einer stabilen flüssig/flüssig-Entmischung für den Betrieb einer kontinuierlichen Fraktionierung. Vorzugsweise wird bei Verwendung eines Einkomponentenlösungsmittel die Temperatur $T_1$ so gewählt, daß sich für den Fall der Löslichkeitsabnahme des Polymers mit fallender Temperatur unterhalb der maximalen Trübungstemperatur und für den Fall der Löslichkeitsabnahme mit zunehmender Temperatur oberhalb der minimalen Trübungstemperatur liegt. Bei Verwendung eines Mischlösungsmittels wird bevorzugt die Temperatur $T_1$ so gewählt, daß eine stabile flüssig/flüssig Entmischung (Verhinderung von Kristallbildung) erfolgt, ein Kettenabbau des Polymeren nicht stattfindet und die makroskopische Phasentrennung innerhalb der Verweilzeit der Phasen in der Apparatur erfolgt. Der Feed wird während der gesamten Fraktionierdauer stabil bezüglich der Abscheidung einer flüssigen oder festen Phase gehalten, und das Polymer darf unter diesen Bedingungen keinen Kettenabbau zeigen. Die Zusammensetzung des Mischlösungsmittels wird vorzugsweise je nach Fraktionierung so gewählt, daß die Verbindungslinie zwischen den Punkten im Gibbschen Phasendreieck, die die Zusammensetzung des Feeds und des Extraktionsagens repräsentieren, die zugehörige Mischungslücke schneidet. Beispiele für die Feedzusammensetzung sind in der Tabelle im anschließenden Beschreibungsteil enthalten.

Bevorzugt werden die Ausgangspolymere nach Ihrer Kettenlänge oder weitgehend unabhängig davon nach Ihrem linearen, verzweigten oder zyklischen Aufbau oder nach Ihrem unterschiedlichen Gehalt an chemisch verschiedenen Bausteinen aufgetrennt. Falls sich die Polymermoleküle einer Ausgangsprobe nicht nur durch ihr Molekulargewicht, sondern auch durch ihren geometrischen Aufbau, beispielsweise durch ihre Linearität oder einen unterschiedlichen Verzweigungsgrad, und/oder durch ihren chemischen Aufbau, beispielsweise Copolymere aus den Monomeren A und B, unterscheiden, müssen die Lösungsmittel der speziellen Zielsetzung entsprechend gewählt werden. Das gleiche gilt für die Fraktionierung cyclischer Verbindungen. Dies bedeutet beispielsweise im Fall einer erwünschten Auftrennung von Copoly-

4

meren nach ihrer chemischen Zusammensetzung (weitgehend unabhängig von ihrem Molekulargewicht), daß die Löslichkeit in den gewählten Extraktionsagenzien stärker von der chemischen Natur der Polymere als von ihrer molekularen Masse abhängen muß. Sind die A-reichen Polymermoleküle schwerer löslich als die B-reichen, so sind die ersteren in der Gelfraktion und die letzteren in der Solfraktion enthalten.

Die Löslichkeit der Copolymeren hängt zum einen von deren Molmasse und zum anderen von deren chemischer Zusammensetzung ab. In zahlreichen Fällen wurden Lösungsmittel/Fällungsmittel-Kombinationen gefunden, die überwiegend nach dem ersten oder nach dem zweiten Gesichtspunkt trennen. Hierfür geeignete Paare lassen sich neben weiteren dem Fachmann vertrauten Verfahren durch Trübungstitration ermitteln.

Das homogene Extraktionsagens kann ein Ein- oder Mehrkomponentenlösungsmittel sein. Bei der Wiederholung der Verfahrensschritte gemäß Merkmal (f) des Anspruchs 1 wird vorzugsweise im Fall der Verwendung von Mischlösungsmitteln deren Gehalt an der thermodynamisch besseren Komponente soweit erhöht, daß bei Beibehaltung der Temperatur $T_1$ die kurzkettigen Bestandteile der als Feed verwendeten Gelfraktion des vorherigen Verfahrensschrittes löslich werden. Die Temperatur $T_2$ ist dann infolge der gestiegenen Einheitlichkeit des Feeds näher bei $T_1$ zu wählen als beim Schritt (d).

Die Temperatur $T_1$ wird gemäß einer bevorzugten Ausgestaltung des Verfahrens im Fall der Verwendung von Einkomponentenlösungsmitteln vergleichsweise angehoben und ein für die Abscheidung einer zweiten Phase ausreichend weit darunter liegende Temperatur $T_2$ (bei der obigen Fallkonstellation 1) gewählt.

Für das Verhältnis $T_1 : T_2$ können keine allgemeinen Kriterien genannt werden. Im Verlauf einer vollständigen Fraktionierung, d.h. Zerlegung eines breit verteilten Ausgangsprodukts in mehrere Fraktionen geringer Uneinheitlichkeit, muß $T_2$ und $T_1$ mit fortschreitenden Fraktionierstufen, wobei die Uneinheitlichkeit des Feeds geringer wird, angenähert werden. Der Abstand der gewählten Betriebstemperatur $T_1$ von der Entmischungstemeratur $T_2$ bei gegebener Zusammensetzung der Lösung wird bestimmt durch die Ziele der Fraktionierung.

Für die Verfahrensdurchführung sind die Kenntnisse der Ausgangsverteilung und eine Entscheidung über die erwünschte Einheitlichkeit der Fraktionen wichtig. Je uneinheitlicher das aufzutrennende Produkt ist, umso kleiner muß der in einem Extraktionsschritt entfernte Sol-Anteil gehalten werden, um die erwünschte Fraktionierung zu erreichen. Dabei wird die Extraktion von kleinen Mengen durch eine Herabsetzung des Flusses des Extraktionsmittels bei gleichem Feedfluß oder Verwendung von Extraktionsagenzien niedrigerer Lösekraft und Konstanthaltung beider Flüsse begünstigt.

Bevorzugt dient bei einer Auftrennung von Polyacrylsäure in konzentrierter wäßriger Lösung deren Lösung in einem Gemisch aus Wasser und einem Mg-Salz oder einem anderen analog wirkenden Salz als Feed und es wird eine konzentrierte wäßrige Lösung des Mg-Salzes bzw. des analogen Salzes als Extraktionsagens verwendet.

Bei einer Auftrennung von Polyvinylchlorid (PVC)-Molekülen wird vorzugsweise als Feed-Zusammensetzung eine 100 %-Mischung aus THF/Wasser/PVC von 75-85%/7,5-12,5%/7,5-12,5%, als Extraktionsagens eine 100%-Mischung aus THF/Wasser im Verhältnis von 80-90%/10-20%, eine Temperatur von $T_1$ von 22-26°C und eine Betriebskonzentrations von 4-6 % PVC gewählt.

Bei einer Auftrennung von Polyisobutylen (PIB)-Molekülen wird vorzugsweise als Feed-Zusammensetzung eine 100%-Mischung aus Toluol/Methylethylketon/PIB von 68-76%/13-17%/11-15%, als Extraktionsagens eine 100%-Mischung aus Toluol/Methylethylketon von 75-85%/15-25%, eine Temperatur $T_1$ von 20-24°C und eine Betriebskonzentration von 3-5 % PIB gewählt.

Für die unter sonst gleichen Bedingungen erzielbare Fraktionierung ist auch eine optimierte Polymerbeladung der Extraktionskolonne günstig, die beispielsweise im Bereich mittlerer Werte insbesondere zwischen 3 und 5 Gew.-% des Polymeren, bezogen auf den gesamten flüssigen Inhalt liegt.

Die Polymerbeladung der Säule muß für das jeweilige System individuell bestimmt werden. Es gilt jedoch die allgemeine Aussage, daß im Fall der Fraktionierung im unterkritischen Bereich eine Polymerkonzentration von 1/3 der kritischen Konzentration und im Fall der überkritischen Fraktionierung von 4/3 bis 7/3 der kritischen Konzentration vorteilhaft ist.

Hinsichtlich der für die Fraktionierung in Frage kommenden Temperaturbereiche ist üblicherweise von dem Arbeiten bei Zimmertemperatur auszugehen, wobei jedoch durch chemische Notwendigkeiten Abweichungen erforderlich sein können, wie beispielsweise im Fall von Polyethylen, für das es kein Lösungsmittel bei Temperaturen von unterhalb ca. 100°C gibt.

Das erfindungsgemäße Verfahren eignet sich in günstiger Weise für die Aufbereitung bzw. das Recyclen und Wiederverwenden von Kunststoffen. Eine bevorzugte Verwendung des nach dem Verfahren fraktionieren Polymers besteht in Form eines Dispergiermittels und/oder als Mahlhilfsmittel für Füllstoffe und/oder als Mineralien und/oder Pigmente, insbesondere für die Papierindustrie.

Die erfindungsgemäße Vorrichtung zur Durchführung des Verfahrens besteht vorteilhaft statt bisher aus einer gepulsten Siebbodenkolonne aus einer ungepulsten Füllkörperkolonne, die aufgrund ihrer Konfiguration einen vergleichsweise geringeren technischen Aufwand erfordert und zu einer besseren Auftrennung führt, da eine Rückvermischung in günstiger Weise vermieden wird.

Bevorzugt sind die Füllkörper frei von durchspülbaren oder flüssigkeitsgefüllten Hohlräumen und weisen eine Oberfläche auf, an der keine der beiden Phasen haftet. Die Extraktionskolonne ist nach einer bevorzugten Ausgestaltung der Erfindung eine kontinuierlich oder periodisch gerührte Kolonne, wobei im Fall der gerührten Kolonne bevorzugt eine Scheibel-Kolonne vorgesehen ist.

Die Extraktionskolonne enthält günstigerweise ferner eine oder mehrere Mischer-Scheider Stufen und weist nach einer bevorzugten Ausgestaltung anstelle der beiden Temperaturregeleinrichtungen eine Temperaturregeleinrichtung auf, die einen Temperaturgradienten entlang der Fraktioniersäule erzeugt.

Bei dem vorgesehenen Vorrichtungsgehäuse der Extraktionskolonne ist für Dichten der Gelphasen, die größer sind als die der Solphasen, oberhalb des Bereichs mit der Temperatur $T_1$ bzw. im umgekehrten Fall unterhalb des Bereichs mit der Temperatur $T_1$, ein zusätzlicher Bereich oberhalb bzw. unterhalb der Zuführung des homogenen Feeds vorgesehen, in dem in günstiger Weise Bedingungen geschaffen sind, unter denen aus der weiterhin nach oben bzw. unten transportieren Solphase eine neue Phase ausgeschieden wird, wobei diese wiederum sedimentierende bzw. hochsteigende Phase bevorzugt die schwerer löslichen Komponenten enthält.

Im oben erwähnten ersten Fall wird diese Abscheidung vorteilhaft dadurch erreicht, daß man die Temperatur $T_2$ gegenüber der Temperatur $T_1$ mit der Folge absenkt, daß die ausgeschiedene Phase sich aus thermodynamischen Gründen auch bei Erreichen der Zone, in der die Temperatur $T_1$ herrscht, nicht wieder auflöst. Die notwendige Abkühlung hängt im angesprochenen ersten Fall (Normalfall) vom verwendeten System ab. In günstiger Weise wird somit eine Behandlung der Aufnehmerphase, aus der das Sol entsteht, vorgenommen, die man mit einem sogenannten "Refluxen" vergleichen kann. Die erreichte Trennkraft ist dem Bereich ebenbürtig, der bei verwandten Methoden (Rektifikation bzw. Extraktion) mit niedrigmolekularen Mischungen erzielt wird.

Durch die vorgesehene jeweilige Extraktion der im oberen Teil neu gebildeten polymerreichen Phase wird es in einer technisch und wirtschaftlich akzeptablen Weise möglich, das Ausgangspolymer in einem Verfahrensschritt so zu zerlegen, daß die abgetrennte Solfraktion sofort mit der gewünschten Einheitlichkeit zur Verfügung steht und die gebildete Gelfraktion unmittelbar wieder für die Abtrennung der nächsten Fraktion durch nochmalige Extraktion unter veränderten Bedingungen zur Verfügung steht.

Als weiterer Vorteil der Erfindung ist darauf zu verweisen, daß zur technischen Fraktionierung von Polymeren der Einsatz von Gelen als neuer Feed ausreicht, und somit die Sole zum Wiedereinsatz als Feed nicht aufgearbeitet werden müssen, wodurch der Aufwand an Zeit und Lösungsmitteln und damit auch die Betriebskosten außerordentlich verringert werden können.

Dies ist vor dem Hintergrund besonders bedeutungsvoll, daß bei dem bisher bekannten Verfahren Solfraktionen wieder als Feed eingesetzt werden mußten, um enge Fraktionen zu erhalten.

Vorzugsweise wird die Verfahrensführung derart vorgenommen, daß in den einzelnen Verfahrensdurchläufen kleine Mengen an leichter löslichem Material extrahiert werden, da dies nicht nur zu einer höheren Fraktioniereffektivität führt, weil der Arbeitspunkt tiefer in die Mischungslücke verlegt wird, sondern auch praktische Vorteile hat, da die Gelphasen unmittelbar als Feed für nachfolgende Verfahrensdurchläufe verwendet werden können und Schwankungen bei den Betriebsbedingungen erheblich geringere Konsequenzen haben. Hinzu kommt im Hinblick auf eine wesentliche praktische Bedeutung, daß dabei erhebliche Mengen an Lösungsmitteln gespart werden können, da in jedem Verfahrensdurchlaufschritt eine endgültige Fraktion extrahiert werden kann.

Nachfolgend wird die Erfindung unter Bezugnahme auf die beigefügten Zeichnungen näher erläutert. Es zeigen:

Fig. 1      eine schematische Darstellung einer Vorrichtung zur Durchführung des Verfahrens gemäß der Erfindung; und

Fig. 2      ein Verfahrensschema zur Beschreibung des Verfahrens zur technischen Fraktionierung von Polymeren gemäß der Erfindung;

Fig. 3      ein Beispiel für ein Fraktionierschema, das die Ergebnisse einer in vier Schritten vorgenommenen Fraktionierung gemäß dem erfindungsgemäßen Verfahren darstellt.

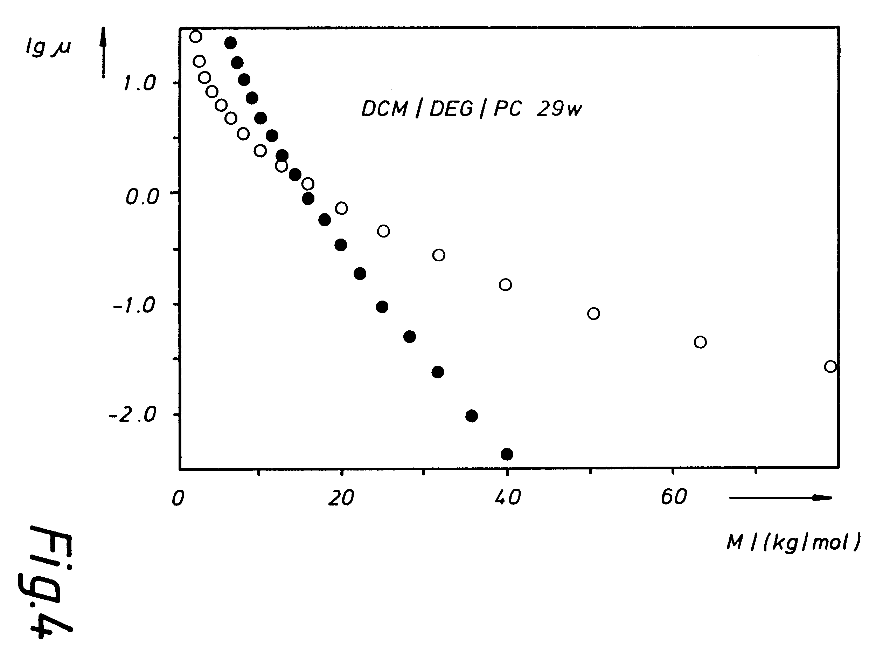

Fig. 4      zeigt eine graphische Darstellung, worin $\mu$ das logarithmierte Verhältnis der Anteile eines Polymeren mit dem Polymerisationsgrad i im Sol zu denen des Gel gegen die Molmasse (M) aufgetragen ist. Damit ist eine quantitative Beurteilung der Fraktioniereffizienz durchführbar. Die größere Steigung des linearen Teils, wie sie im Fall der erfindungsgemäßen kontinuierlichen Polymerfraktionierung (●) gegeben ist, zeigt im Gegensatz zu der geringeren Steigung der Kurve für den Fall der kontinuierlichen Polymerfraktionierung nach dem Stand der Technik (o) die gesteigerte Fraktioniereffizienz der erfindungsgemäßen Apparatur.

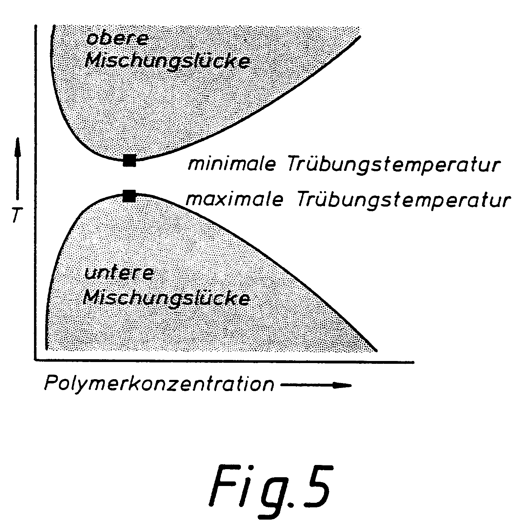

Fig. 5 zeigt eine schematische Darstellung von Trübungskurven für Systeme bei denen die Löslichkeit des Polymeren mit steigender Temperatur abnimmt (obere Mischungslücke) bzw. zunimmt (untere Mischungslücke).

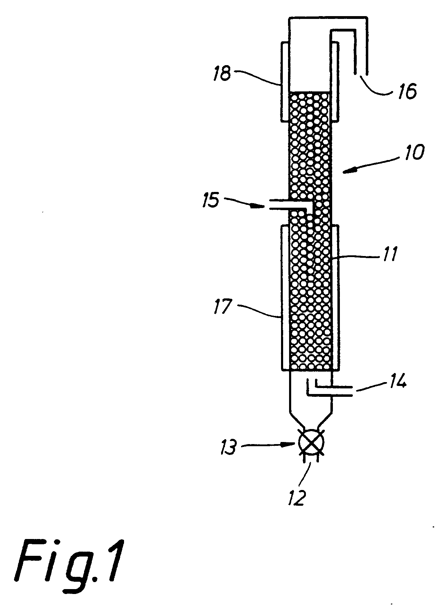

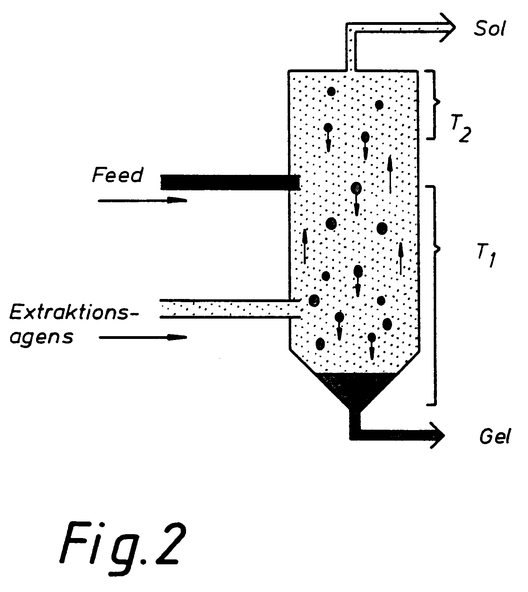

Die Fig. 1 und 2 veranschaulichen schematisch den grundsätzlichen Verfahrensablauf unter Einsatz einer Extraktionskolonne 10, die mit Füllkörpern gefüllt ist. Dargestellt ist dabei der obige erste Fall einer kontinuierlichen technischen Fraktionierung von Polymeren, die nur linear gebaute Moleküle unterschiedlichen Molekulargewichts aus chemisch identischen Bausteinen (lineare Homopolymere) enthalten, wobei die Polymerlöslichkeit mit steigendem Molekulargewicht und mit sinkender Temperatur abnimmt und wobei die Dichte des Feeds größer ist als die des Extraktionsagens. Schematisiert dargestellt ist eine Extraktionskolonne 10, die aus einem länglichen, vorzugsweise zylindrischen Gehäuse besteht, das mit Füllkörpern 11 versehen ist. Die Füllkörper 11 bestehen aus einem inerten Material. Sie sind frei von durchspülbaren und flüssigkeitsgefüllten Hohlräumen und weisen eine Oberfläche auf, an der keine Polymere enthaltende Phasen haften.

Die Extraktionskolonne 10 besitzt an ihrem unteren Ende einen Gelausgang 12, der durch eine Verschlußvorrichtung 13, wie z.B. einen Hahn oder ein Ventil verschlossen werden kann. Im unteren Bereich der Extraktionskolonne befindet sich ein Eingang 14 für das Zuführen eines Extraktionsagens und etwa im Bereich der Mitte der Extraktionskolonne 10 ist ein Eingang 15 für das Zuführen eines Feeds gebildet, während das obere Ende der Extraktionskolonne 10 einen Ausgang 16 für das Abziehen von Sol aufweist. Der unterhalb der oberen Zuführstelle liegende Kolonnenabschnitt wird auf einer einstellbaren Temperatur $T_1$ mittels einer schematisch angedeuteten Temperaturregeleinrichtung 17 gehalten, die in Fig. 1 nur schematisch als wärmende bzw. kühlende Hülse angedeutet ist. Die Füllung der Extraktionskolonne 10 mit Füllkörpern 11 setzt sich über den Bereich des Eingangs 15 nach oben über einen Temperaturübergangsbereich bis in einen Abschnitt fort, der durch eine zweite schematisch mit 18 bezeichnete Temperaturregeleinrichtung auf einer Temperatur $T_2$ gehalten wird. Die Temperaturregelung $T_2$ muß geeignet vom Feedzulauf beabstandet sein. Im Grenzfall können $T_1$ und $T_2$ direkt aneinander grenzen.

Das Zuführen des Feeds in den Eingang 15 sowie des Extraktionsagens in den Eingang 14 erfolgt in nicht dargestellter Weise mittels einer Pumpe.

In einer besonderen Ausführungsform ist die Extraktionskolonne als eine gerührte Kolonne gestaltet. Dabei kann die gerührte Kolonne beispielsweise eine Scheibel-Kolonne sein. In einer weiteren besonderen Ausführungsform liegt eine Extraktionskolonne vor, die eine oder mehrere Mischer-Scheider-Stufen enthält.

Für eine weitere Verfeinerung des Verfahrens zur technischen Fraktionierung der Polymere eignet sich auch eine Temperaturregeleinrichtung, die einen Temperaturgradienten entlang der Fraktioniersäule erzeugt.

Die Höhe der Extraktionskolonne 10 beträgt für industrielle Anwendungen vorzugsweise etwa 3 bis 6 m und ist abhängig von den jeweiligen Feed- und Extraktionsagensbeschickungen, insbesondere den Sedimentationsgeschwindigkeiten und den Molekulargewichten der nach unten sinkenden Fraktionierungsbestandteilen. Der Durchmesser bewegt sich vorzugsweise in der Größenordnung zwischen 10 und 30 cm.

Eine schematische Darstellung des Verfahren ist in Fig. 2 gezeigt.

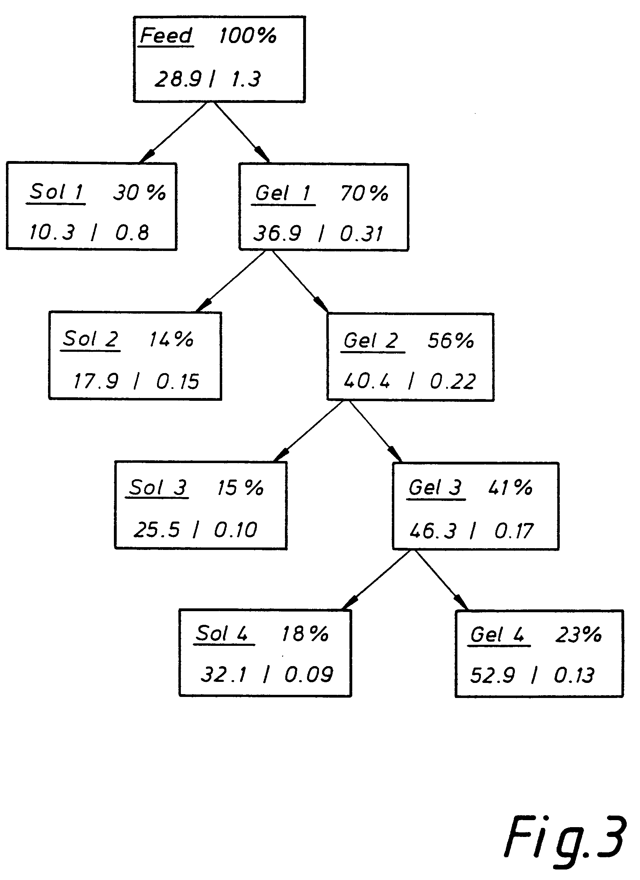

Fig. 3 stellt ein vollständiges Fraktionierschema des Bisphenol-A-Polycarbonats ($M_w$ = 28,9 kg/mol ; U = 1,3) dar. Das Ziel der Fraktionierung war die Zerteilung des Ausgangsproduktes in fünf etwa gleichgroße Fraktionen geringer Uneinheitlichkeit. Die Pfeilpaare symbolisieren jeweils einen Fraktionierschritt, wobei das zu fraktionierende Produkt den Ausgangspunkt der Pfeile bildet und die Spitzen auf das entstehende Sol bzw. Gel zeigt.

Der Lauf C1 (siehe Tabelle) stellt somit die Fraktionierung des Rohprodukts dar. In diesem ersten Schritt konnten 30 Gew.-% des Polymer in die verdünnte Phase gelangen. Die relativ große Uneinheitlichkeit des ersten Sols resultiert aus der Molekulargewichtsverteilung des Ausgangsprodukts, in dem noch eine Vielzahl verschieden langer niedrigmolekularer Polymerketten enthalten sind.

In den weiteren Frationierschritten wurde jeweils das Gel ohne weitere Aufarbeitung als neuer Feed verwendet. Durch Variation der EA-Zusammensetzung (Extraktionsagens-Zusammensetzung) war es möglich jeweils etwa 20% Polymer als Sol abzutrennen. Die Uneinheitlichkeiten der Endprodukte

$$U = \frac{M_w}{M_n} - 1$$

($M_w$ = Gewichtsmittel des Molekulargewichts ;

$M_n$ = Zahlenmittel des Molekulargewichts)

lagen im Bereich von U = 0,1.

Die starkumrandeten Felder der Fig. 3 stellen die Endprodukte der Fraktionierung dar.

Ausgehend von dem oben angesprochenen ersten Fall wird der Extraktionskolonne im mittleren Bereich ein homogener Feed mittels einer nicht dargestellten Einrichtung zugeführt. Es handelt sich um einen homogenen Feed, der das zu fraktionierende Polymer in wenigstens einem Lösungsmittel enthält.

## Beispiele:

Das erfindunsgemäße Verfahren wurde bei der Fraktionierung folgender Substanzen angewandt:

Polyvinylchlorid (PVC),

Polystyrol (PS),

Polyisobutylen (PIB),

Polyethylen (PE) und

Bisphenol-A-Polycarbonat (PC).

Für PVC wurden folgende Betriebsparameter gewählt :

| PVC : | Feed-Zusammensetzung :<br>Extraktionsagens :<br>Betriebskonz. :<br>Temperatur $T_1$ : | THF/Wasser/PVC = 80/10/10<br>THF/Wasser = 85/15<br>ca. 5 % PVC<br>24°C |
|---|---|---|

Für PIB wurden folgende Betriebsparameter gewählt :

| PIB : | Feed-Zusammensetzung:<br>Extraktionsagens :<br>Betriebskonz. :<br>Temperatur $T_1$ : | Toluol/Methylethylketon/PIB = 72/15/13<br>Toluol/Methylethylketon = 80/20<br>ca. 4 % PIB<br>22°C |
|---|---|---|

Beispiel für den Fall 2 (Homopolymere, deren Löslichkeit mit steigender Temperatur abnimmt und bei denen die Dichte des Feeds größer als die Dichte des Extraktionsagens ist).

Für eine Fraktionierung mit Hilfe eines Mischlösungsmittels ist das ternäre System Aceton/Butanon/Polystyrol mit einer molekulargewichtsabhängigen minimalen Entmischungstemperatur im Bereich von 95°C geeignet. Die Betriebsbedingungen wurden so gewählt, daß $T_1$ oberhalb von 95°C liegt und $T_2$ einige Grade größer ist als $T_1$.

Beispiel zum Fall 3 (Homopolymere), deren Löslichkeit mit sinkender Temperatur abnimmt und wobei die Dichte des Feed kleiner als die Dichte des Extraktionsagens ist).

Eine Fraktionierung von linearem Polyethylen wurde bei Temperaturen von $T_1$ = 130 - 140°C ausgeführt. Bei diesen Temperaturen konnte eine Kristallisation des Polymers verhindert werden. Als Lösungsmittel wurde Diphenylether verwendet, dessen Dichte sich genügend, d.h. min. 0,03 g $cm^{-3}$ von der des Polymers unterscheidet.

In nachstehender Tabelle sind weitere Ausführungsbeispiele der Erfindung zusammen mit Vergleichsbeispielen angegeben.

Tabelle

| Versuche mit kontinuierlicher Polymerfraktionierung (CPF-Versuche) mit dem System Dichlormethan/Diethylenglykol/Bisphenol A-Polycarbonat | | | | | |
|---|---|---|---|---|---|
| Spalte | 1 | 2 | 3 | 4 | 5 |
| CPF-Durchlauf Feed | | EA | T/°C | | $w_{wp}$ |
| | $w_1/w_2/w_3$ | $w_2$ | $T_1$ | $T_2$ | |
| A | 0,82/0,13/0,05 | 0,22 | 23 | / | 0,025 |
| B | 0,81/0,11/0,08 | 0,20 | 23 | / | 0,018 |
| C1 | 0,77/0,08/0,15 | 0,22 | 21 | -3 | 0,013 |
| C2 | Gel von C1 | 0,21 | 23 | +1 | 0,015 |
| C3 | Gel von C2 | 0,20 | 25 | +5 | 0,012 |
| C4 | Gel von C3 | 0,19 | 25 | +12 | 0,017 |
| D | 0,77/0,08/0,15 | 0,19 | 21 | +11 | 0,032 |

A: Herkömmliche CPF- Pulsierte Siebbodenkolonne mit Solaustritt am Feed-Eingang, B: Wie A jedoch mit Füllkörpern (Glaskugeln, d = 4-7 mm) ohne Pulsation, C1 - C4 : Versuche nach dem erfindunggemäßen Verfahren mit Füllkörpern (Glaskugeln, d = 4 mm) D: Wie C1 - C4 jedoch mit d = 8mm Glaskugeln CPF: kontinuierliche Polymerfraktionierung EA: Extraktionsagens

Die Zusammensetzung von Feed bzw. Extraktionsagens ist in Gewichtsbrüchen (w) angegeben, wobei der Index 1 für Dichlormethan, 2 für Diethylenglykol und 3 für Bisphenol A-Polycarbonat steht.

$w_{wp}$ gibt die mittlere Polymerkonzentration in der Säule an.

**Patentansprüche**

1. Verfahren zur technischen Fraktionierung von Polymeren unter Verwendung einer Extraktionskolonne und eines homogenen Extraktionsagens,
**gekennzeichnet durch**
folgende Verfahrensschritte:

(a) ein homogener Feed wird einem Bereich der Extraktionskolonne zugeführt, der von deren oberen Ende näher beabstandet ist, wenn der Feed eine größere Dichte als das Extraktionsagens aufweist, und der von deren unteren Ende näher beabstandet ist, wenn der Feed eine geringere Dichte als das Extraktionsagens aufweist;

(b) das homogene Extraktionsagens wird einem vom unteren Ende näher beabstandeten Bereich der Extraktionskolonne zugeführt, wenn der Feed eine größere Dichte als das Extraktionsagens aufweist, und einem vom oberen Ende näher beabstandeten Bereich zugeführt, wenn der Feed eine geringere Dichte als das Extraktionsagens aufweist, wobei der unterhalb der oberen Zuführstelle liegende Kolonnenabschnitt auf einer ersten Temperatur $T_1$ gehalten wird;

(c) die Flüsse des Feeds und des Extraktionsagens werden derart gewählt, daß bei der Temperatur $T_1$ zwei Phasen koexistieren und die erwünschte Zerteilung des Ausgangspolymeren auf die beiden erhaltenen Fraktionen gewährleistet ist,

wobei ein Weitertransport der aus dem Extraktionsagens hervorgegangenen polymerärmeren Phase in einen anschließenden Kolonnenbereich erfolgt, in dem eine Temperatur $T_2$ herrscht, die niedriger ist als die Temperatur $T_1$, wenn die Polymerlöslichkeit mit fallender Temperatur abnimmt, und die größer ist als die Temperatur $T_1$, wenn die Polymerlöslichkeit mit steigender Temperatur abnimmt;

(d) bei der Temperatur $T_2$ wird eine polymerreichere Phase abgeschieden, die sich in den anschließenden Kolonnenbereich mit der Temperatur $T_1$ bewegt, dort nicht mehr vollständig aufgelöst und in den Extraktionsprozeß derart einbezogen wird, daß im stationären Zustand an dem Kolonnenende, an dem diese Phase austritt, eine Gelphase abgenommen wird, welche die in der einen Fraktion erwünschten molekularen Bestandteile enthält;

(e) am anderen Kolonnenende wird die Solphase ausgetragen, welche die in der anderen Fraktion erwünschten molekularen Bestandteile enthält; und

(f) die Schritte (a) bis (e) werden unter direkter Verwendung der gewonnenen Gelfraktion als Feed solange wiederholt, bis die Ausgangsprobe in die gewünschte Zahl von Fraktionen zerlegt ist.

2. Verfahren nach Anspruch 1,
dadurch gekennzeichnet,
daß die Temperatur $T_1$ im Falle binärer Systeme vom Extremum der Trübungskurve bis zu 30°C entfernt im Innern der Mischungslücke und im Fall ternärer Systeme im Temperaturbereich der flüssig/flüssig-Entmischung gewählt wird, wobei man sowohl für die binären als auch für die ternären Systeme $T_2$ je nach den Temperatureinflüssen auf die Löslichkeit der Polymeren bis zu 40 °C von $T_1$ entfernt festgelegt.

3. Verfahren nach einem oder mehreren der vorhergehenden Ansprüche,
dadurch gekennzeichnet,
daß bei dem Verfahrensschritt (f) bei der Verwendung von Mischlösungsmitteln deren Gehalt an der thermodynamisch besseren Komponente soweit erhöht wird, daß bei Beibehaltung der Temperatur $T_1$ die leichter löslichen Bestandteile der als Feed verwendeten Gelfraktion des vorherigen Verfahrensschrittes löslich werden, wobei die Temperatur $T_2$ infolge der gestiegenen Einheitlichkeit des Feeds näher bei der Temperatur $T_1$ liegt, als beim vorhergehenden Schritt.

4. Verfahren nach einem oder mehreren der vorhergehenden Ansprüche,
dadurch gekennzeichnet,
daß bei Verwendung eines Einkomponentenlösungsmittels bei dem Verfahrensschritt (f) im Falle der Abnahme der Polymerlöslichkeit mit sinkender Temperatur die Temperatur $T_1$ angehoben und die Temperatur $T_2$ in einem Abstand unterhalb der Temperatur $T_1$ eingestellt wird, der mit sinkendem Betrag der Mischungswärme des Systems zunimmt.

5. Verfahren nach einem oder mehreren der vorhergehenden Ansprüche,
dadurch gekennzeichnet,
daß bei Verwendung eines Einkomponentenlösungsmittels im Fall der Abnahme der Polymerlöslichkeit mit steigender Temperatur die Temperatur $T_1$ abgesenkt und die Temperatur $T_2$ entsprechend über diesem Wert gewählt wird.

6. Verfahren nach einem oder mehreren der vorhergehenden Ansprüche,
dadurch gekennzeichnet,
daß die Zusammensetzung des Feeds durch einen Punkt im Gibbschen Phasendreieck festgelegt wird, der außerhalb der Mischungslücke des betreffenden Systems bei einer gegebenen Arbeitstemperatur liegt.

7. Verfahren nach einem oder mehreren der vorhergehenden Ansprüche,
dadurch gekennzeichnet,
daß bei Verwendung eines Einkomponentenlösungsmittels die Temperatur $T_1$ so gewählt wird, daß sie für den Fall der Löslichkeitsabnahme des Polymers mit fallender Temperatur unterhalb der maximalen Trübungstemperatur und für den Fall der Löslichkeitsabnahme mit zunehmender Temperatur oberhalb der minimalen Trübungstemperatur liegt.

8. Verfahren nach einem oder mehreren der vorhergehenden Ansprüche,
dadurch gekennzeichnet,
daß bei Verwendung eines Mischlösungsmittels die Temperatur $T_1$ so gewählt wird, daß eine stabile Flüssig/Flüssig-Entmischung zur Verhinderung von Kristallbildung erfolgt, ein Kettenabbau des Polymeren nicht stattfindet und die makroskopische Phasentrennung innerhalb der Verweilzeit der Phasen in der Apparatur erfolgt.

9. Verfahren nach einem oder mehreren der vorhergehenden Ansprüche,
dadurch gekennzeichnet,
daß die Zusammensetzung des Mischlösungsmittels je nach Fraktionierung so gewählt wird, daß die Verbindungslinie zwischen den Punkten im Gibbschen Phasendreieck, die die Zusammensetzung des Feeds und des Extraktionsagens repräsentieren, die zugehörige Mischungslücke schneidet.

10. Verfahren nach einem oder mehreren der vorhergehenden Ansprüche,
dadurch gekennzeichnet,
daß die Ausgangspolymeren nach ihrer Kettenlänge oder weitgehend unabhängig davon nach ihrem linearen, verzweigten oder cyclischen Aufbau oder nach ihrem unterschiedlichen Gehalt an chemisch verschiedenen Bausteinen aufgetrennt werden.

11. Verfahren nach einem oder mehreren der vorhergehenden Ansprüche,
dadurch gekennzeichnet,
daß bei einer Auftrennung von Polyacrylsäure in konzentrierter wäßriger Lösung deren Lösung in einem Gemisch aus Wasser und einem Mg-Salz oder einem anderen analog wirkenden Salz als Feed dient und eine konzentrierte wäßrige Lösung des Mg-Salzes oder des analogen Salzes als Extraktionsagens verwendet wird.

12. Verfahren nach einem oder mehreren der vorhergehenden Ansprüche,
dadurch gekennzeichnet,
daß bei einer Auftrennung von Polyvinylchlorid (PVC)-Molekülen als Feed-Zusammensetzung eine 100 %-Mischung aus THF/Wasser/PVC von 75-85%/7,5-12,5%/7,5-12,5%, als Extraktionsagens eine 100%-Mischung aus THF/Wasser im Verhältnis von 80-90%/10-20%, eine Temperatur von $T_1$ von 22-26°C und eine Betriebskonzentrations von 4-6 % PVC gewählt wird.

13. Verfahren nach einem oder mehreren der vorhergehenden Ansprüche,
dadurch gekennzeichnet,
daß bei einer Auftrennung von Polyisobutylen (PIB)-Molekülen als Feed-Zusammensetzung eine 100%-Mischung aus Toluol/Methylethylketon/PIB von 68-76%/13-17%/11-15%, als Extraktionsagens eine 100%-Mischung aus Toluol/Methylethylketon von 75-85%/15-25%, eine Temperatur $T_1$ von 20-24°C und eine Betriebskonzentration von 3-5 % PIB gewählt wird.

14. Verfahren nach einem oder mehreren der vorhergehenden Ansprüche,
dadurch gekennzeichnet,
daß bei der Polymerbeladung der Fraktioniersäule im Fall der Fraktionierung im unterkritischen Bereich eine Polymerkonzentration von 1/3 der kritischen Konzentration und im Fall der überkritischen Fraktionierung von 4/3 bis 7/3 der kritischen Konzentration gewählt wird.

15. Verfahren nach einem der vorangehenden Ansprüche für die Aufbereitung bzw. das Recycling und die Wiederverwendung von Kunststoffen.

16. Vorrichtung zur Durchführung des Verfahrens nach einem oder mehreren der vorhergehenden Ansprüche,
**gekennzeichnet durch**
eine Extraktionskolonne (10) mit einem länglichen Gehäuse, das einen unteren, eine erste Temperaturregeleinrichtung (17) aufweisenden Abschnitt und einen sich daran anschließenden oberen zweiten Abschnitt mit einer zweiten Temperaturregeleinrichtung (18) aufweist und einen näher vom oberen Ende der Extraktionskolonne beabstandeten ersten Einlaß (15) für Feed/Extraktionsagens, einen näher vom unteren Ende der Extraktionskollone beabstandeten zweiten Einlaß (14) für Extraktionsagens/Feed, einen Fraktionsablauf (16) am oberen Ende der Extraktionskolonne und einen Fraktionsablauf (12) am unteren Ende der Extraktionskolonne.

17. Vorrichtung nach Anspruch 16,
dadurch gekennzeichnet,
daß die Extraktionskolonne Füllkörper (11) enthält.

18. Vorrichtung nach Anspruch 17,
dadurch gekennzeichnet,
daß die Füllkörper (11) frei von durchspülbaren und flüssigkeitsgefüllten Hohlräumen sind, und eine Oberfläche aufweisen, an der keine der beiden Phasen haftet.

**19.** Vorrichtung nach Anspruch 16,
dadurch gekennzeichnet,
daß die Extraktionskolonne eine kontinuierlich oder periodisch gerührte Kolonne ist.

**20.** Vorrichtung nach Anspruch 19,
dadurch gekennzeichnet,
daß die gerührte Kolonne eine Scheibel-Kolonne ist.

**21.** Vorrichtung nach Anspruch 16,
dadurch gekennzeichnet,
daß die Extraktionskolonne eine oder mehrere Mischer-Scheider-Stufen enthält.

**22.** Vorrichtung nach einem oder mehreren der Ansprüche 16 - 21,
dadurch gekennzeichnet,
daß die Extraktionskolonne (10) anstelle der beiden Temperaturregeleinrichtungen (17) und (18) eine Temperaturregeleinrichtung aufweist, die einen Temperaturgradienten entlang der Fraktioniersäule erzeugt.

## Claims

**1.** Process for industrial fractionation of polymers using an extraction column and a homogeneous extraction agent,
characterized by the following process steps:
(a) a homogeneous feed is supplied to a region of the extraction column which is nearer to the upper end thereof when the feed has a greater density than the extraction agent and which is nearer to the lower end thereof when the feed has a lower density than the extraction agent;
(b) the homogeneous extraction agent is supplied to a region of the extraction column nearer to the lower end when the feed has a greater density than the extraction agent and is supplied to a region nearer to the upper end when the feed has a lower density than the extraction agent, the column section lying below the upper supply point being held at a first temperature $T_1$;
(c) the flows of the feed and extraction agent are selected in such a manner that at the temperature $T_1$ two phases coexist and the desired distribution of the starting polymer amongst the two fractions obtained is ensured,
a further transport of the polymer-poorer phase originating from the extraction agent being effected to an adjoining column region in which a temperature $T_2$ obtains which is lower than the temperature $T_1$ when the polymer solubility decreases with decreasing temperature and which is higher than the temperature $T_1$ when the polymer solubility decreases with increasing temperature;
(d) at the temperature $T_2$ a polymer-richer phase is separated which moves into the adjoining column region with the temperature $T_1$, is no longer completely dissolved there and is incorporated into the extraction process in such a manner that in the stationary state at the column end at which this phase emerges a gel phase is removed which contains the molecular constituents desired in the one fraction;
(e) at the other column end the sol phase is discharged which contains the molecular constituents desired in the other fraction; and
(f) the steps (a) to (e) are repeated with direct use of the gel fraction obtained as feed until the starting sample has been broken down into the desired number of fractions.

**2.** Process according to claim 1,
characterized in
that the temperature $T_1$ in the case of binary systems is selected up to 30°C remote from the extreme of the turbidity curve in the interior of the miscibility gap and in the case of ternary systems in the temperature range of the liquid/liquid separation, $T_2$ being fixed up to 40°C from $T_1$, according to the temperature influences on the solubility of the polymers, both for the binary and for the ternary systems.

**3.** Process according to one or more of the preceding claims,
characterized in
that in the process step (f) when using mixed solvents their content of the thermodynamically better component is increased to such an extent that whilst retaining the temperature $T_1$ the more readily soluble constituents of the gel fraction of the previous process step used as feed become soluble, the temperature $T_2$ being closer to the temperature $T_1$ than in the preceding step due to the increased uniformity of the feed.

4. Process according to one or more of the preceding claims,
characterized in
that when using a single-component solvent in the process step (f) in the case of decreasing polymer solubility with decreasing temperature the temperature $T_1$ is raised and the temperature $T_2$ is set at a distance beneath the temperature $T_1$ which increases with decreasing amount of the mixing heat of the system.

5. Process according to one or more of the preceding claims,
characterized in
that when using a single-component solvent in the case of decreasing of the polymer solubility with increasing temperature the temperature $T_1$ is lowered and the temperature $T_2$ is selected correspondingly above said value.

6. Process according to one or more of the preceding claims,
characterized in
that the composition of the feed is defined by a point in the Gibbs phase triangle which lies outside the miscibility gap of the respective system for a given operating temperature.

7. Process according to one or more of the preceding claims,
characterized in
that when using a single-component solvent the temperature $T_1$ is selected so that for the case of solubility decrease of the polymer with decreasing temperature it lies beneath the maximum turbidity temperature and for the case of solubility decrease with increasing temperature it lies above the minimum turbidity temperature.

8. Process according to one or more of the preceding claims,
characterized in
that when using a mixed solvent the temperature $T_1$ is selected so that a stable liquid/liquid separation takes place to prevent crystallization, a chain breakdown of the polymer does not occur and the macroscopic phase separation takes place within the residence time of the phases in the apparatus.

9. Process according to one or more of the preceding claims,
characterized in
that the composition of the mixed solvent, depending on the fractionation, is selected so that the connecting line between the points in the Gibbs phase triangle which represent the composition of the feed and of the extraction agent intersects the associated miscibility gap.

10. Process according to one or more of the preceding claims,
characterized in
that the starting polymers are separated according to their chain length or substantially independently thereof according to their linear, branched or cyclic structure or according to their different content of chemically different structural elements.

11. Process according to one or more of the preceding claims,
characterized in
that in a breaking down of polyacrylic acid in a concentrated aqueous solution the solution thereof in a mixture of water and an Mg salt or another analogously acting salt is used as feed and a concentrated aqueous solution of the Mg salt or of the analogous salt is used as extraction agent.

12. Process according to one or more of the preceding claims,
characterized in
that in a breaking down of polyvinyl chloride (PVC) molecules as feed composition a 100 % mixture of THF/water/PVC of 75-85%/7.5-12.5%/7.5-12.5% is selected, as extraction agent a 100 % mixture of THF/water in the ratio 80-90%/10-20%, a temperature of $T_1$ of 22-26° and an operating concentration of 4-6 % PVC.

13. Process according to one or more of the preceding claims,
characterized in
that in a breaking down of polyisobutylene (PIB) molecules as feed composition a 100 % mixture of toluene/methylethyl ketone/PIB of 68-76%/13-17%/11-15% is selected, as extraction agent a 100 % mixture of toluene/methylethyl ketone of 75-85%/15-25%, a temperature $T_1$ of 20-24°C and an operating concentration of 3-5% PIB.

14. Process according to one or more of the preceding claims,
characterized in
that in the polymer charging of the fractionating column in the case of fractionation in the sub-critical range a polymer concentration of 1/3 of the critical concentration is selected and in the case of the supercritical fractionation a concentration of 4/3 to 7/3 of the critical concentration.

15. Process according to any one of the preceding claims for the processing or recycling and reuse of plastics.

16. Apparatus for carrying out the method according to one or more of the preceding claims,
characterized by
an extraction column (10) having an elongated housing which comprises a lower section having a first temperature control means (17) and an adjoining upper second section having a second temperature control means (18) and a first inlet (15) for feed/extraction agent nearer to the upper end of the extraction column, a second inlet (14) for extraction agent/feed nearer to the lower end of the extraction column, a fraction discharge (16) at the upper end of the extraction column and a fraction discharge (12) at the lower end of the extraction column.

17. Apparatus according to claim 16,
characterized in
that the extraction column contains filling bodies (11).

18. Apparatus according to claim 17,
characterized in
that the filling bodies (11) are free of flushable and liquid-filled cavities and have a surface to which neither of the two phases adheres.

19. Apparatus according to claim 16,
characterized in
that the extraction column is a continuously or periodically agitated column.

20. Apparatus according to claim 19,
characterized in
that the agitated column is a Scheibel column.

21. Apparatus according to claim 16,
characterized in
that the extraction column contains one or more mixer-separator stages.

22. Apparatus according to one or more of claims 16 - 21,
characterized in
that the extraction column (10) comprises instead of the two temperature control means (17) and (18) a temperature control means which generates a temperature gradient along the fractionating column.

**Revendications**

1. Procédé pour le fractionnement industriel de polymères par utilisation d'une colonne d'extraction et d'un agent d'extraction homogène,

14

caractérisé par les étapes suivantes :

(a) une charge homogène est introduite dans une zone de la colonne d'extraction, située relativement près de l'extrémité supérieure de cette dernière si la charge présente une densité supérieure à celle de l'agent d'extraction, et située plus près de l'extrémité inférieure de la colonne si la charge présente une densité plus faible que celle que l'agent d'extraction ;

(b) l'agent d'extraction homogène est introduit dans une zone de la colonne d'extraction, située relativement près de l'extrémité inférieure de cette dernière si la charge présente une densité supérieure à celle de l'agent d'extraction, et est introduit dans une zone située plus près de l'extrémité supérieure de la colonne si la charge présente une densité plus faible que l'agent d'extraction, en maintenant à une première température $T_1$ la portion de colonne se trouvant au-dessous du point d'introduction supérieur ;

(c) les flux de la charge et de l'agent d'extraction sont choisis de telle sorte que, à la température $T_1$, deux phases coexistent et le fractionnement désiré du polymère de départ est assuré entre les deux fractions obtenues,

la phase pauvre en polymère obtenue à partir de l'agent d'extraction étant en outre transportée dans une zone contiguë de la colonne dans laquelle règne une température $T_2$, qui est inférieure à la température $T_1$ si la solubilité du polymère diminue lorsque la température décroît, et qui est supérieure à la température $T_1$ si la solubilité du polymère diminue lorsque la température augmente ;

(d) à la température $T_2$, on sépare une phase relativement riche en polymère, qui circule vers la zone contiguë de la colonne à la température $T_1$, où elle n'est plus à l'état totalement dissous, et qui est engagée dans le procédé d'extraction de telle sorte que, à l'état stationnaire, on récupère à l'extrémité à laquelle cette phase sort de la colonne, une phase de gel qui contient les composants moléculaires souhaités dans la première fraction ;

(e) à l'autre extrémité de la colonne, on récupère une phase de sol, qui contient les composants moléculaires souhaités dans l'autre fraction ; et

(f) les étapes (a) à (e) sont répétées en réutilisant directement en tant que charge la fraction de gel récupérée, jusqu'à ce que l'échantillon de départ soit séparé en le nombre désiré de fractions.

2. Procédé selon la revendication 1, caractérisé en ce que

la température $T_1$ est choisie dans le cas de systèmes binaires à l'intérieur du domaine de démixtion, l'écart avec l'extremum de la courbe de turbidité pouvant aller jusqu'à 30°C, et est choisie dans le cas de systèmes ternaires dans le domaine de température de la démixtion liquide/liquide,

en fixant la température $T_2$, aussi bien pour les systèmes binaires que pour les systèmes ternaires, selon l'influence de la température sur la solubilité des polymères, avec un écart par rapport à $T_1$ pouvant aller jusqu'à 40°C.

3. Procédé selon l'une quelconque des revendications précédentes, caractérisé en ce que

dans l'étape (f), en utilisant des mélanges de solvants, on augmente la teneur de ces derniers en composés relativement bons du point de vue thermodynamique à tel point que, lors du maintien à la température $T_1$, les composants relativement faiblement solubles de la fraction de gel obtenue à l'étape précédente et utilisée en tant que charge deviennent solubles, la température $T_2$ étant plus proche de la température $T_1$ que dans l'étape précédente, du fait de l'uniformité accrue de la charge.

4. Procédé selon l'une ou plusieurs des revendications précédentes, caractérisé en ce que,

en utilisant un solvant à un seul composant dans l'étape (f), dans le cas où la solubilité du polymère diminue pour des températures décroissantes, la température $T_1$ est augmentée et la température $T_2$ est fixée en-dessous de la température $T_1$ avec un écart qui augmente lorsque la valeur de la chaleur de mélange du système diminue.

5. Procédé selon l'une ou plusieurs des revendications précédentes, caractérisé en ce que,

en utilisant un solvant à un seul composant dans le cas où la solubilité du polymère diminue pour des températures croissantes, la température $T_1$ est abaissée et la température $T_2$ est choisie en conséquence au-dessus de cette valeur.

6. Procédé selon l'une ou plusieurs des revendications précédentes, caractérisé en ce que,

la composition de la charge est déterminée sur le diagramme de phases ternaire de Gibbs par un point qui se situe en dehors du domaine de démixtion du système en question à une température de travail donnée.

**7.** Procédé selon l'une ou plusieurs des revendications précédentes, caractérisé en ce que, en utilisant un solvant à un seul composant, la température $T_1$ est choisie de façon à se trouver au-dessous de la température maximale de turbidité dans le cas où la solubilité du polymère diminue lorsque la température décroît, et au-dessus de la température minimale de turbidité dans le cas où la solubilité du polymère diminue lorsque la température augmente.

**8.** Procédé selon l'une ou plusieurs des revendications précédentes, caractérisé en ce que, en utilisant un mélange de solvants, la température $T_1$ est choisie de telle sorte qu'on obtient une démixtion liquide/liquide stable pour empêcher la formation de cristaux, il ne se produit aucune destruction de la chaîne du polymère, et on obtient une séparation de phases macroscopique pendant le temps de séjour des phases dans le dispositif.

**9.** Procédé selon l'une ou plusieurs des revendications précédentes, caractérisé en ce que, la composition du mélange solvant est choisie en fonction du fractionnement de façon à ce que la ligne joignant les points du diagramme de phases ternaire de Gibbs, qui représentent les compositions de la charge et de l'agent d'extraction, coupe le domaine de démixtion correspondant.

**10.** Procédé selon l'une ou plusieurs des revendications précédentes, caractérisé en ce que, les polymères de départ sont séparés en fonction de leur longueur de chaîne ou largement indépendamment de celle-ci en fonction de leur structure linéaire, ramifiée ou cyclique, ou en fonction de leur teneur différente en des constituants chimiquement différents.

**11.** Procédé selon l'une ou plusieurs des revendications précédentes, caractérisé en ce que, pour la séparation de poly(acide acrylique) en solution aqueuse concentrée, on utilise comme charge cette solution dans un mélange d'eau et d'un sel de magnésium ou d'un autre sel d'activité analogue, et en tant qu'agent d'extraction, une solution aqueuse concentrée du sel de magnésium ou du sel analogue.

**12.** Procédé selon l'une ou plusieurs des revendications précédentes, caractérisé en ce que, pour la séparation de molécules de polychlorure de vinyle (PVC) on choisit comme composition de charge un mélange à 100 % de THF/eau/PVC dans les proportions 75-85 %/7,5-12,5%/ 7,5-12,5 %, en tant qu'agent d'extraction un mélange à 100 % THF/eau dans les proportions 80-90 %/10-20 %, on choisit une température $T_1$ de 22 à 26°C et une concentration en fonctionnement de 4 à 6 % de PVC.

**13.** Procédé selon l'une ou plusieurs des revendications précédentes, caractérisé en ce que, pour la séparation de molécules de polyisobutylène (PIB), on choisit comme composition de charge un mélange à 100% de toluène/méthyléthylcétone/PIB dans les proportions 68-76 %/13-17 %/11-15 %, comme agent d'extraction un mélange à 100 % de toluène/méthyléthylcétone dans les proportions 75-85 %/15-25 %, on choisit une température $T_1$ de 20 à 24°C et une concentration de travail de 3 à 5 % de PIB.

**14.** Procédé selon l'une ou plusieurs des revendications précédentes, caractérisé en ce que, on choisit comme charge en polymère de la colonne de fractionnement, dans le cas du fractionnement dans le domaine sous-critique une concentration en polymère de 1/3 de la concentration critique et, dans le cas de fractionnement sur-critique une concentration en polymère de 4/3 à 7/3 de la concentration critique.

**15.** Procédé selon l'une ou plusieurs des revendications précédentes pour la préparation ou le recyclage et la réutilisation de matières plastiques.

**16.** Dispositif pour la mise en oeuvre du procédé selon une ou plusieurs des revendications précédentes, caractérisé par une colonne d'extraction (10) avec un enveloppe allongée, qui présente une partie inférieure, comprenant un premier système régulateur de température (17) et une deuxième partie supérieure contiguë à la première avec un deuxième système régulateur de température (18), et comprenant une première alimentation (15) pour la charge/l'agent d'extraction, située relativement près de l'extrémité supérieure de la colonne d'extraction, une deuxième alimentation (14) pour l'agent d'extraction/la charge située plus près de l'extrémité inférieure de la colonne d'extraction, une conduite de sortie (16) pour la fraction à l'extrémité supérieure de la colonne d'extraction et une conduite de sortie (12) pour la fraction à l'extrémité inférieure de la colonne d'extraction.

17. Dispositif selon la revendication 16, caractérisé en ce que
la colonne d'extraction contient un garnissage (11).

18. Dispositif selon la revendication 17, caractérisé en ce que
le garnissage (11) est exempt d'espaces vides susceptibles d'être lessivés et d'être remplis par le liquide, et présente une surface à laquelle aucune des deux phases n'adhère.

19. Dispositif selon la revendication 16, caractérisé en ce que
la colonne d'extraction est une colonne agitée en continu ou de façon périodique.

20. Dispositif selon la revendication 19, caractérisé en ce que
la colonne agitée est une colonne à plateau.

21. Dispositif selon la revendication 16, caractérisé en ce que
la colonne d'extraction comprend un ou plusieurs étages mélangeurs-séparateurs.

22. Dispositif selon l'une ou plusieurs des revendications 16 à 21, caractérisé en ce que
la colonne d'extraction (10) présente, à la place des deux systèmes régulateurs de température (17) et (18), un système régulateur de température qui produit un gradient de température le long de la colonne de fractionnement.

Fig.1

Fig.2

Fig.3

*Fig.4*

obere
Mischungslücke

minimale Trübungstemperatur

maximale Trübungstemperatur

T

untere
Mischungslücke

Polymerkonzentration ⟶

Fig.5